Europäisches Patentamt

European Patent Office

Office européen des brevets

(11) Veröffentlichungsnummer: **0 208 797**
A1

(12) **EUROPÄISCHE PATENTANMELDUNG**

(21) Anmeldenummer: 85108771.8

(22) Anmeldetag: 13.07.85

(51) Int. Cl.⁴: **A45D 34/04** , A46B 11/02 , G01F 11/02

(43) Veröffentlichungstag der Anmeldung:
21.01.87 Patentblatt 87/04

(84) Benannte Vertragsstaaten:
AT BE CH DE FR GB IT LI LU NL SE

(71) Anmelder: **A.W. Faber- Castell Unternehmensverwaltung GmbH & Co.**
Nürnberger Strasse 2
D-8504 Stein(DE)

(72) Erfinder: **Katz, Otto, Dipl.-Ing.**
Michael-Kupfer-Strasse 3a
D-8540 Schwabach(DE)

(54) **Vorrichtung zum Auftragen von fliessfähigen Massen.**

(57) In einer Vorrichtung zum Auftragen von fließfähigen Massen ist in einem Gehäuse (1), das durch eine Abschlußkappe (13) verschließbar ist, auf einer in Längsrichtung verschiebbaren Kolbenstange (15) ein Kolben (25) angeordnet, der auf der von der Abgabeöffnung abgewandten Seite ein Richtgesperre (26) aufweist. Zusätzlich ist auf der Kolbenstange eine Membran (20) fest angeordnet, die mit einer Stirnseite gegen eine Öffnung (8) anliegt und bei Verschiebung der Kolbenstange diese freigibt. Die Vorrichtung dient hauptsächlich zum Auftragen von färbenden Flüßigkeiten wie sie in der Kosmetik, zum Beispiel bei Nagellacken Verwendung finden oder auch zum Auftragen von Lösungsmitteln und Klebstoffen.

Fig.1

EP 0 208 797 A1

## Vorrichtung zum Auftragen von fließfähigen Massen

Die Erfindung betrifft eine Vorrichtung zum Auftragen von fließfähigen Massen nach den Merkmalen des Oberbegriffs des Anspruchs 1.

Nach der US-PS 3.682.559 ist bereits eine Vorrichtung dieser Art bekannt, die insbesondere zum Auftragen von Farben, wie sie in der Kosmetik üblich sind, verwendet wird. Aus einem Flüssigkeitsbehälter kann eine bestimmte Menge abgegeben werden, wozu der Benutzer mittels eines Druckknopfes ein Ventil öffnen muß. Als Auftragelement kann bei der vorbekannten Vorrichtung eine Faserspitze oder ein Pinsel herkömmlicher Art verwendet werden, wie sie bei Schreibgeräten oder bei Nagellackfläschchen bekannt sind. Die Vorrichtung besteht im Wesentlichen aus einem zylindrischen Gehäuse, in das ein Tank eingesetzt ist, der an einem Ende die Form eines Balgs hat, der durch einen beweglichen Druckknopf zusammendrückbar ist. Dieser Tank weist an der Stirnseite, die zum Auftragorgan zeigt, ein Ventil auf, das sich gegen eine Druckfeder abstützt. Das Ventil wird dann geöffnet, sobald Druck auf den Balg ausgeübt wird. Die aufzutragende Flüssigkeit strömt solange aus dem Ventil zu dem Auftragelement, wie es von dem Benutzer durch einen Druck auf den Balg offengehalten wird. Die Flüssigkeit wird außerhalb des Tanks in eine Kammer geleitet, in der sich die Druckfeder befindet und in die ein Teil des Auftragelementes ragt, das somit mit Flüssigkeit getränkt wird.

Nach jeder Abgabe von Flüssigkeit geht der elastische Teil des Tanks, nämlich der vorerwähnte Balg wieder in seine Ausgangslage zurück, es ist daher erforderlich, die ausgegebene Flüssigkeit durch Luft zu ersetzten. In der Beschreibung der bekannten Vorrichtung ist auf dieses Problem zwar hingewiesen, es werden jedoch keine Mittel zur Lösung angegeben. Falls erforderlich, soll ein Luftkanal in dem Tank vorgesehen werden. Durch diesen Luftkanal kann demnach nicht nur Luft zum Druckausgleich in den Behälter strömen, sondern es können auch in der fließfähigen Masse enthalte Lösungsmittel oder Lösungsmitteldämpfe entweichen. Dies hat bekanntlich zur Folge, daß ein vollständiges Eintrocknen und eine Funktionsunfähigkeit des Gerätes hervorgerufen wird. Es ist daher nur möglich mit einer Konstruktion dieser Art färbende Flüssigkeiten zu verwenden, die keine flüchtigen Lösungsmittel enthalten, da bei dieser Konstruktion sonst ein zu schnelles, unerwünschtes Eintrocknen der Masse stattfinden würde. Ein weiterer Nachteil besteht darin, daß der Benutzer das Austrittsventil selbst steuern muß, das bedeutet, daß entweder zuviel oder zuwenig Flüssigkeit dem Auftragorgan zugeführt werden kann. Der Benutzer hat dabei selbständig dafür Sorge zu tragen, daß die richtige Menge von Flüssigkeit dem Auftragelement zugeführt wird.

Um den Luftzutritt in einen Behälter zur Abgabe einer fließfähigen Masse zu verhindern, wurde bereits (Europäisches Patent EP -B 0 054 212) ein Behälter für einen Spender vorgeschlagen, der einen Kolben mit Stützfedern aufweist, der auf einer Betätigungsstange verschiebbar ist. Dieser Kolben dient dazu, die Masse, bei der es sich um eine Paste handelt, aus dem Behälter herauszudrücken, während Stützfedern ein Zurückweichen des Kolbens verhindern, so daß dieser ständig, unabhängig vom Füllungsgrad des Behälters an der Masse anliegt und somit dort Lufteinschlüsse ausschließt. Diese Konstruktion ist jedoch nicht für fließfähige Massen geeignet, da der Abgabekanal ständig geöffnet bleibt. Eine unabdingbare Voraussetzung zur Applikation von fließfähigen Massen ist es jedoch, daß der Abgabekanal selbsttätig geschlossen wird und daß außerdem kein Luftzutritt zum Behälterinneren erfolgen kann.

Es ist deshalb Aufgabe der Erfindung zum Auftragen von fließfähigen Massen eine Vorrichtung zu schaffen, die die Abgabe gleichmäßig dosierter Mengen ermöglicht und bei der ein Luftzutritt zum Behälterinneren verhindert wird. Der Benutzer muß die Vorrichtung bequem mit einer Hand benutzen können, wobei die vorbestimmte Ausgabemenge nicht verändert werden darf.

Zur Lösung dieser Aufgabe wird eine Vorrichtung der vorbeschriebenen Art erfindungsgemäß so ausgestaltet, daß zusätzlich auf der Kolbenstange, die den Nachfolgekolben mit den Stützfedern trägt, eine Membran fest angeordnet ist, die mit einer Stirnseite gegen die Öffnung anliegt und bei Verschiebung der Kolbenstange diese freigibt. Mit der erfindungsgemäßen Vorrichtung wird somit ein Zusammenwirken des Sperrkolbens, der einen Luftzutritt zum Behälterinneren verhindert und der Dosiervorrichtung für die auszugebende Masse, in der Weise ermöglicht, daß diese funktionswesentlichen Teile über ein einziges Betätigungselement beeinflußt werden können.

Eine sichere Funktion der Auftragvorrichtung bei langer Lebensdauer und günstigen Strömungsverhältnissen der Masse lässt sich durch die Kombination mehrerer Merkmale erreichen. Es handelt sich dabei um die Ausgestaltung der Membran, die stirnseitig an einem Ventilkolben angeordnet ist, der die Membran in einer Richtung abstützt. Die Funktionssicherheit wird durch einen Außendurchmesser der Membran erhöht, der größer ist als der Innendurchmesser des Zylinders, in dem die Membran axialbewegt wird. Ein guter Fluß der Masse wird durch in den Ventilkolben am Außenumfang eingeformte Axialnuten erreicht.

Die Fließgeschwindigkeit der Masse, die bei Überdruck aus dem Behälter abfließt, lässt sich durch eine Begrenzung der Kippbewegung der Membran dadurch einstellen, daß der Ring an der Seite, an der die Membran anliegt eine Schräge aufweist. Durch zusätzliche Kapillarkanäle, die in den Ring mit der Schräge eingeformt sind, ist der Abfluß der Masse sichergestellt.

Das Auftragelement trocknet dann langsamer ein, wenn es nicht vollkommen frei dem Luftzutritt ausgesetzt ist. Ein Auftragelement, das mittels des Kupplungselementes in die Austrittsbohrung des konischen Vorderteils versenkbar ist, trocknet deshalb langsamer ein, weil es in dieser Bohrung von der Masse wenigstens teilweise umgeben ist und die Luft nur im Bereich eines geringen Luftspaltes eintreten kann.

Um die Länge des Vorschubweges des Auftragelementes beliebig einstellen zu können und um gleichzeitig auch die dosierte Menge in Abhängigkeit von dem Verwendungszweck der Vorrichtung oder der Viskosität der Masse, regeln zu können, ist es von Vorteil, wenn die Membran in einer Endlage an der Stirnwand anliegt und in der anderen Endlage in einem Zylinder, in dem die Membran mittels der Kolbenstange verschiebbar ist, wobei zwischen den beiden Endlagen eine Kammer angeordnet ist, deren Durchmesser größer als der des Zylinders ist.

Ein Lufteintritt in das Innere des Behälters wird vorteilhafterweise dann vermieden, wenn der Sperrkolben nach Art eines Richtgesperres in einer Richtung leichtgängig, jedoch unter Aufrechterhaltung der Dichtwirkung, verschiebbar ist und in der anderen Richtung gesperrt wird. Diese Forderungen werden dadurch erfüllt, daß an dem Sperrkolben eine Sperrlamelle befestigt ist, die mehrere Radialschlitze aufweist und deren Außendurchmesser, in ebener Lage, größer ist als der Innendurchmesser des Behälters. Eine besonders gute Dichtwirkung wird mit einem Sperrkolben erreicht, der aus weichelastischem Material gefertigt ist. Unter weichelastischem Material sind in diesem Fall Kunststoffe zu verstehen, wie z.B. Polypropylen - (PP), Polyäthylen (PE), Silikonkautschuk oder ähnliche.

Vorteilhaft ist es, wenn die fließfähige Masse auch bei vorgestelltem Auftragelement in jeweils dosierten Mengen nachfließen kann, ohne daß das Auftragelement vollständig in das Vorderteil zurückgezogen werden muß. Dies läßt sich durch eine Anordnung erreichen, bei der zwischen der Querwand und dem Kupplungselement eine Druckfeder eingefügt ist, deren Blocklänge kürzer ist als der Weg des Kupplungselementes von einem Anschlag an der Querwand bis au einem zweiten Anschlag, der durch Anliegen des Ventilkolbens an einer Stirnwand bestimmt ist.

Eine einfache Bauweise des Sperrkolbens kann auch durch Verzicht auf die Sperrlamellen erreicht werden, wenn zwischen dem Ventilkolben und dem Sperrkolben auf der Kolbenstange eine Steuerscheibe reibschlüssig angeordnet ist, die, der Bewegung der Kolbenstange folgend, abwechselnd an der Stirnwand oder an der gegenüberliegenden Wand, in die Überströmkanäle münden, zur Anlage gebracht werden kann.

Fehlbetätigungen der Vorrichtung lassen sich vermeiden, bei einem Betätigungselement, das der Benutzer nur mit Hilfe eines zusätzlichen Teiles beeinflußen kann. Vorteilhafterweise wird dies durch eine Verschlußkappe erreicht, die sowohl auf das konische Vorderteil als auch auf das Kupplungselement aufsteckbar ist. Eine zusätzliche Sicherheit gegenüber Fehlbedienungen ist dann gegeben, wenn das Kupplungselement in den beiden Endposition der Kolbenstange in einer Vertiefung des Behälters liegt. Dadurch wird die Möglichkeit ausgeschlossen, daß der Benutzer unbeabsichtigt die Kolbenstange betätigt, das Ventil öffnet und fließfähige Masse auslaufen läßt.

Ausführungsbeispiele der Erfindung sind den Zeichnungen dargestellt und werden im folgenden näher beschrieben.

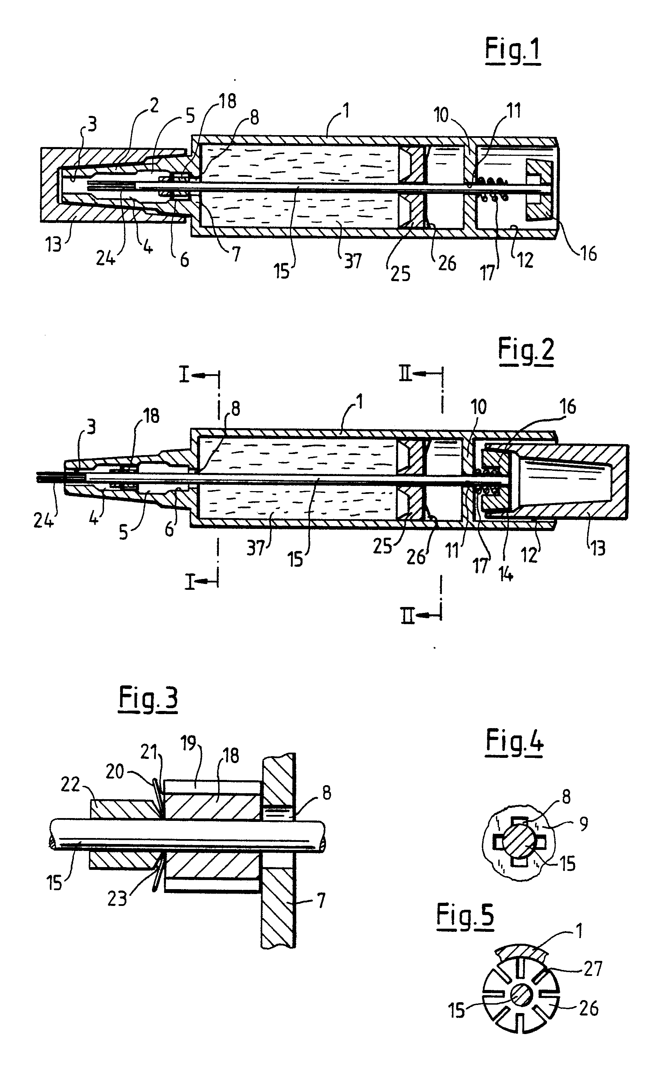

Es zeigen: Figur 1 einen Längsschnitt der Vorrichtung mit aufgesteckter Verschlußkappe,

Figur 2 einen Längsschnitt der Vorrichtung in der Gebrauchslage mit umgesteckter Verschlußkappe,

Figur 3 eine Teilansicht des Ventilkolbens im Schnitt,

Figur 4 eine Ansicht entlang der Linie I -I aus Figur 2,

Figur 5 eine Ansicht auf den Sperrkolben entlang der Linie II -II aus Figur 2,

Figur 6 ein weiteres Ausführungsbeispiel mit zusätzlicher Steuerscheibe im Längsschnitt,

Figur 7 eine Ansicht entlang der Linie III -III aus Figur 6 und

Figur 8 eine Schnittdarstellung des Ringes auf der Kolbenstange.

Die in Fig. 1 dargestellte Vorrichtung besteht aus einem Behälter 1, dessen Vorderteil 2 sich konisch verjüngt und in diesem Bereich eine Austrittsbohrung 3, einen Zylinder 4 und eine erweiterte Kammer 5 aufweist, die in eine Bohrung 6 übergeht. Die Bohrung 6 endet an einer Stirnwand 7. Die Verbindung zum Inneren des Behälters 1 bilden Öffnungen 8, zwischen welchen Führungsstege 9 liegen. Das Innere des Behälters 1 ist nach hinten durch eine Querwand 10 abgeschlossen, die eine Führungsbohrung 11 aufweist. Anschließend an die Querwand 10 ist eine Vertiefung 12 durch eine Verlängerung des Behälters 1 ausgebildet. Zum Abschluß der Austrittsbohrung 3 am konischen Vorderteil 2 dient eine Verschlußkappe 13, die wenigstens einen Innenkonus 14 aufweist.

Eine Kolbenstange 15 ist in der Führungsbohrung 11 axialbeweglich gelagert; sie weist an einem Ende ein Kupplungselement 16 auf, das gegen eine Druckfeder 17 zur Anlage gebracht werden kann. Weiterhin ist auf der Kolbenstange ein Ventilkolben 18 angeordnet, in dem mehrere Axialnuten 19 eingeformt sind und an dessen Stirnseite 21 eine Membran 20 anliegt, die durch einen Ring 22 mit einer Schräge 23 abgestützt wird. Am vorderen Ende trägt die Kolbenstange ein Auftragelement 24, das die Form einer Faserspitze, eines Pinsels oder einer Abrundung der Kolbenstange 15 aufweisen kann. Axialverschiebbar und abgedichtet ist auf der Kolbenstange 15 ein Sperrkolben 25 gelagert, der sich gegen die Innenwand des Behälters 1 anlegt und an dem eine Sperrlamelle 26 befestigt ist, die vorzugsweise aus Stahl besteht und mehrere Radialschlitze 27 aufweist. Die Sperrlamelle 26 stützt sich an der Innenwand des Behälters 1 ab; in unmontiertem Zustand stellt sie eine Scheibe dar, mit einem Durchmesser, der größer ist als der Innendurchmesser des Behälters 1.

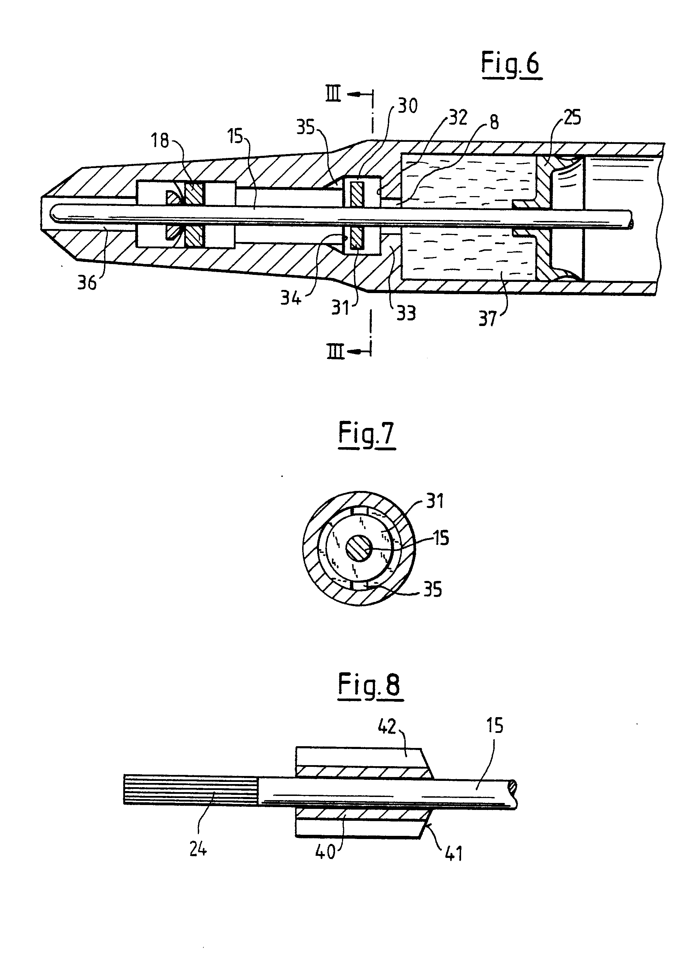

In der Fig. 6 ist ein weiteres Ausführungsbeispiel dargestellt, bei dem der Sperrkolben 25 keine Sperrlamelle 26 aufweist. Dieser Sperrkolben 25 liegt mit einer größeren Reibung an der Behälterinnenwand an, als an derKolbenstange 15, wodurch eine Bewegung der Kolbenstange 15 möglich ist, ohne daß sich der Sperrkolben 25 verschiebt. In dem Behälter 1 ist im Bereich des konischen Vorderteils 2 ein Ringraum 30 eingeformt, der eine Steuerscheibe 31 aufnimmt, die reibschlüssig auf der Kolbenstange 15 beweglich ist. Diese Steuerscheibe 31 kann somit an eine hintere Planfläche 32, die an der Wand 33 gebildet wird, angelegt werden. Beim Verschieben der Kolbenstange 15 kann die Steuerscheibe 31 auch an einer vorderen Planfläche 34, in welche Überströmkanäle 35 münden, zur Anlage gebracht werden. Als Auftragelement dient bei dieser Ausführung ein Abgabekanal 36, durch den die Masse 37 ausfließt.

In der Fig. 8 ist eine Einzelheit an dem Ring 40 dargestellt, der wie bereits bei dem Ausführungsbeispiel nach der Fig. 3 eine Schräge 41 aufweist. Zur besseren Verteilung der fließfähigen Masse 37, die durch den Ventilkolben 18 herausgedrückt wird, sind Kapillarkanäle 42 vorgesehen, die zur Bildung eines kapillaren Gefälles, in Richtung zum Auftragelement 24, im Querschnitt reduziert sind.

Funktionsweise

Der mit fließfähiger Masse 37 gefüllte Behälter 1 ist nach Fig. 1 mit einer Verschlußkappe 13 nach vorne abgedichtet. Um die Vorrichtung in Betrieb zu nehmen, ist zunächst die Verschlußkappe 13 abzunehmen und auf das Kupplungselement 16 aufzustecken. Dabei wird bereits die Kolbenstange 15 nach vorne bewegt und mit dieser der Ventilkolben 18, der dabei die Öffnung 8 freigibt. Nun kann bereits Masse 37 aus dem Behälterinneren heraustreten, da durch den Ventilkolben 18 eine leichte Saugwirkung erzeugt wird. Diese Saugwirkung ist jedoch unterbrochen, sobald der Ventilkolben 18 die Kammer 5 erreicht, die einen größeren Durchmesser aufweist als die Membran 20. Durch die Länge der Kammer 5 ist es somit möglich, die Kolbenstange vorzuschieben und das Auftragelement 24 aus der Austrittsbohrung 3 herauszustellen. Tritt bei der weiteren Vorwärtsbewegung der Kolbenstange 15 der Ventilkolben 18 in den Zylinder 4 ein, so legt sich die Membran 20 an die Stirnseite des Ventilkolbens 18 an und bewirkt eine Abdichtung, die zur Folge hat, daß ein Unterdruck erzeugt wird, durch den weitere fließfähige Masse 37 aus dem Behälterinneren herausgesaugt wird. Bei der Bewegung des Ventilkolbens 18 innerhalb des Zylinders 4 trifft das Kupplungselement 16 auf die Druckfeder 17 auf. Am Ende der Bewegung des Kupplungselements 16, das durch die umgesteckte Verschlußkappe 13 beaufschlagt wird, zieht die Druckfeder 17 die Kolbenstange 15 wieder zurück, sobald das Kupplungselement 16 nicht mehr gedrückt wird. Bei der Rückwärtsbewegung der Kolbenstange 15 drückt der Ventilkolben 18 gegen die fließfähige Masse 37, welche die Kammer 5 nunmehr ausgefüllt hat. Die Masse 37 dringt somit in die Axialnuten 19 ein, kippt die Membran 20 nach vorne und strömt schließlich in Richtung zum Auftragelement 24 oder in den Abgabekanal 36. Die Dosiermenge ist durch den Weg der Druckfeder 17 vorgegeben, während der Dosiervorgang bzw. das Ausströmen der Masse 37, unter Wirkung der sich entspannenden Druckfeder 17 abläuft.

Bei jedem Dosiervorgang wird somit die Kolbenstange 15 zunächst nach vorne verschoben und danach unter Wirkung der Druckfeder 17 wieder zurückgeholt. Die abgegebene Menge der fließfähigen Masse 37 ist somit bestimmt durch den Weg des Sperrkolbens 25, der der Masse 37 nachfolgt, wobei er durch die Saugwirkung, die Adhäsionskräfte und letzlich durch die Schwerkraft unterstützt wird. Um ein Zurückgehen des Sperrkolbens 25 zu verhindern ist eine Sperrlamelle 26 vorgesehen, deren Aufgabe jedoch auch mittels der Steuerscheibe 31, die in der Fig. 6 dargestellt ist, übernommen werden kann. Die Steuerscheibe 31 legt sich beim Zurückgehen der Kolbenstange 15 an die Planfläche 32 an und verschließt somit die Öffnung 8. In der umgekehrten Richtung beim Vorschub der Kolbenstange 15 und beim Ansaugen der fließfähigen Masse 37, durch den Ventilkolben 18 bzw. dessen Membran 20, legt sich die Steuerscheibe 31 an die vordere Planfläche 34 an, wobei die Überströmkanäle 35 ein Durchfließen der Masse 37 gestatten.

Mit Hilfe der vorbeschriebenen Vorrichtung ist es somit möglich, fließfähige Massen 37 unterschiedlicher Viskosität in dosierter Menge auf ein Auftragelement 24 zu übertragen bzw. aus einem Abgabekanal 36 herauszudrücken.

Das Auftragelement 24, das in den Zylinder 4 des konischen Vorderteiles 2 zurückgestellt werden kann, ist dort nicht nur in der Ruhelage geschützt, sondern es wird auch vermieden, daß beim Aufstrecken der Verschlußkappe 13 eine Beschädigung auftreten kann, was besonders von Bedeutung ist, wenn als Auftragelement 24 ein Pinsel mit weichen Borsten verwendet wird. Außerdem hat die Lagerung des Auftragelements 24 in dem Zylinder 4 und der Kammer 5 zur Folge, daß es, im zurückgezogenen Zustand, nahezu vollständig von der Masse 37 umgeben ist, wodurch ein Eintrocknen der Pinselborsten weitgehend vermieden wird. Beim Vorstellen des Auftragelements 24 ist dieses daher bereits mit flüssiger Masse 37 getränkt und gebrauchsfähig. Evtl. Eintrocknungen entstehen nur am Ende der Austrittsbohrung 3, die von dem Auftragelement 24 durchstoßen werden können, ohne daß Beschädigungen auftreten, da das Auftragelement 24 in der Austrittsbohrung 3 eng geführt ist.

Bezugszeichenliste

| | | | |
|---|---|---|---|
| 1 | Behälter | 21 | Stirnseite |
| 2 | Vorderteil, konisch | 22 | Ring |
| 3 | Austrittsbohrung | 23 | Schräge |
| 4 | Zylinder | 24 | Auftragelement |
| 5 | Kammer | 25 | Sperrkolben |
| 6 | Bohrung | 26 | Sperrlamelle |
| 7 | Stirnwand | 27 | Radialschlitz |
| 8 | Öffnung | 28 | |
| 9 | Führungssteg | 29 | |
| 10 | Querwand | | |
| 11 | Führungsbohrung | 30 | Ringraum |
| 12 | Vertiefung | 31 | Steuerscheibe |
| 13 | Verschlußkappe | 32 | Planfläche, hinten |
| 14 | Innenkonus | 33 | Wand |
| 15 | Kolbenstange | 34 | Planfläche, vorne |
| | | 35 | Überströmkanal |
| 16 | Kupplungselement | 36 | Abgabekanal |
| 17 | Druckfeder | 37 | Masse |
| 18 | Ventilkolben | 38 | |
| 19 | Axialnut | 39 | |
| 10 | Membran | | |
| | | 40 | Ring |
| | | 41 | Schräge |
| | | 42 | Kapillarkanal |

**Ansprüche**

1. Vorrichtung zum Auftragen von fließfähigen Massen mit folgenden Merkmalen:

a) Die Vorrichtung hat einen Vorratsbehälter dessen Querschnitt über die Länge gleich ist;

b) an einer Stirnseite des Vorratsbehälters ist eine Kammer angeordnet, die mit dem Vorratsbehälter über eine Öffnung verbunden ist;

c) im Vorratsbehälter ist auf einer in Längsrichtung

verschiebbaren Kolbenstange ein Kolben gelagert, der seinerseits gegenüber der Kolbenstange ebenfalls in Längsrichtung verschiebbar ist;

d) der Kolben weist auf der von der Abgabeöffnung abgewandten Seite ein Richtgesperre auf;

e) die Kolbenstange ist in Richtung ihrer Längsachse mittels eines von außen zugänglichen Betätigungselementes verschiebbar;

dadurch gekennzeichnet.

daß

f) auf der Kolbenstange (15) eine Membran (20) festangeordnet ist, die mit einer Stirnseite (21) gegen die Öffnung (8) anliegt und bei Verschiebung der Kolbenstange (15) diese freigibt.

2. Vorrichtung nach Anspruch 1,

gekennzeichnet durch folgende Merkmale:

a) Die Membran (20) ist stirnseitig an einem Ventilkolben (18) angeordnet;

b) der Außendurchmesser der Membran (20) ist größer als der Innendurchmesser des Zylinders (4);

c) in den Ventilkolben (18) sind am Außenumfang Axialnuten (19) eingeformt.

3. Vorrichtung nach den Ansprüchen 1 und 2,

kennzeichnet durch folgende Merkmale:

a) Die Membran (20) ist zwischen dem Ventilkolben (18) und einem Ring (22) auf der Kolbenstange (15) befestigt;

b) der Ring (22) weist an der Seite, an der die Membran (20) anliegt, eine Schräge (23) auf.

4. Vorrichtung nach den Ansprüchen 1 bis 3,

· dadurch gekennzeichnet,

daß in dem Ring (40) mit der Schräge (41) Kapillarkanäle (42) eingeformt sind.

5. Vorrichtung nach einem der Ansprüche 1 bis 4,

dadurch gekennzeichnet,

daß das Auftragelement (24) mittels des Kupplungselementes (16) in die Austrittsbohrung (3) des konischen Vorderteiles (2) versenkbar ist.

6. Vorrichtung nach einem der Ansprüche 1 bis 5,

dadurch gekennzeichnet,

daß die Membran (20) in einer Endlage an der Stirnwand (7) anliegt und in der anderen Endlage in einem Zylinder (4), in dem die Membran (20) mittels der Kolbenstange (15) verschiebbar ist, wobei zwischen den beiden Endlagen eine Kammer (5) angeordnet ist, deren Durchmesser größer als der des Zylinders (4) ist.

7. Vorrichtung nach einem der Ansprüche 2 bis 6,

dadurch gekennzeichnet,

daß an dem Sperrkolben (25) eine Sperrlamelle (26) befestigt ist, die mehrere Radialschlitze (27) aufweist und deren Außendurchmesser, in ebener Lage, größer ist als der Innendurchmesser des Behälters (1).

8. Vorrichtung nach einem der Ansprüche 1 bis 7,

dadurch gekennzeichnet,

daß der Sperrkolben (25) aus weichelastischem Material gefertigt ist.

9. Vorrichtung nach einem der Ansprüche 1 bis 8,

dadurch gekennzeichnet,

daß zwischen der Querwand (10) und dem Kupplungselement (16) eine Druckfeder (17) eingefügt ist, deren Blocklänge kürzer ist als der Weg des Kupplungselementes (16) von einem ersten Anschlag an der Querwand (10) bis zu einem zweiten Anschlag, der durch Anliegen des Ventilkolbens (18) an einer Stirnwand (7) bestimmt ist.

10. Vorrichtung nach Anspruch 1,

dadurch gekennzeichnet,

daß zwischen dem Ventilkolben (18) und dem Sperrkolben (25) auf der Kolbenstange (15) eine Steuerscheibe (31) reibschlüssig angeordnet ist, die, der Bewegung der Kolbenstange (15) folgend, abwechselnd an der Stirnwand (7) oder an der gegenüberliegenden Wand (33), in die Überströmkanäle (35) münden, zur Anlage gebracht werden kann.

11. Vorrichtung nach Anspruch 1,

dadurch gekennzeichnet,

daß die Verschlußkappe (13) sowohl auf das konische Vorderteil (2) als auch auf das Kupplungselement (16) aufsteckbar ist.

12. Vorrichtung nach Anspruch 1,

dadurch gekennzeichnet,

daß das Kupplungselement (16) in beiden Endpositionen der Kolbenstange (15) in einer Vertiefung (12) des Behälters (1) liegt.

Fig.1

Fig.2

Fig.3

Fig.4

Fig.5

Fig.6

Fig.7

Fig.8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-2 587 794 (LE ROY E. WALKER) | | A 45 D 34/04 |
| | | | A 46 B 11/02 |
| | --- | | G 01 F 11/02 |
| A | US-A-3 351 074 (ASTON) | | |
| | --- | | |
| A | US-A-2 382 314 (HERB) | | |
| | --- | | |
| A | GB-A- 24 019 (THORNTON)(A.D. 1910) | | |
| | --- | | |
| A | GB-A- 134 705 (HAMMOND) | | |
| | --- | | RECHERCHIERTE SACHGEBIETE (Int. Cl.4) |
| D,A | EP-A-0 054 212 (COLGATE) | | |
| | --- | | |
| A | FR-A-1 062 365 (GUILBERT) | | A 45 D |
| | | | A 46 B |
| | ----- | | G 01 F |
| | | | B 65 D |
| | | | B 43 M |
| | | | A 47 K |

Der vorliegende Recherchenbericht wurde für alle Patentansprüche erstellt.

| Recherchenort DEN HAAG | Abschlußdatum der Recherche 17-02-1986 | Prüfer SIGWALT C. |
|---|---|---|